Europäisches Patentamt

(19) European Patent Office

Office européen des brevets

(11) Numéro de publication: **0 233 120**
**A2**

(12) **DEMANDE DE BREVET EUROPEEN**

(21) Numéro de dépôt: **87400268.6**

(22) Date de dépôt: **05.02.87**

(51) Int. Cl.⁴: **G 01 N 21/17**
G 01 N 25/18, G 01 B 11/06

(30) Priorité: **06.02.86 FR 8601613**

(43) Date de publication de la demande:
**19.08.87 Bulletin 87/34**

(84) Etats contractants désignés: **DE GB**

(71) Demandeur: **UNIVERSITE DE REIMS CHAMPAGNE
ARDENNE
23, rue Boulard
F-51100 Reims (FR)**

(72) Inventeur: **Egee, Michel
5, rue de la Meuse
F-51100 Reims (FR)**

**Dartois, Robert
1 Ter A,rue de Chevigné
F-51100 Reims (FR)**

Marx, Jean
7 Allée du Béarn
F-51350 Cormontreuil (FR)

Merienne, Etienne
68, rue de Sillery
51100 Reims (FR)

Regalia, Marcel
18,rue de l'Adriatique
F-51100 Reims (FR)

Poplimont,Philippe
49,rue des Trois Pillers
F-51100 Reims (FR)

Van Schel,Etienne
25,rue Francois Dor
F-51100 Reims (FR)

(74) Mandataire: **Martin, Jean-Jacques et al
Cabinet REGIMBEAU 26, Avenue Kléber
F-75116 Paris (FR)**

(54) **Procédé et dispositif d'analyse et de mesure des paramètres physiques d'un matériau en couches par radiométrie thermique.**

(57) L'invention concerne un procédé et un dispositif d'analyse et de mesure des paramètres physiques d'un matériau (1) en couches (10,11), paramètres tels que l'absorptivité B, la diffusivité A de la couche superficielle, et la résistance thermique R de l'interface entre les deux couches par radiométrie.

L'échantillon est excité au moyen d'un flux d'énergie thermique, modulé en amplitude à une fréquence haute Fh et à une fréquence basse Fb. Les paramètres sont calculés à partir des mesures de phase et d'amplitude du signal thermique.

Application au contrôle non destructif de produits industriels.

FIG.1

EP 0 233 120 A2

## Description

## "PROCEDE ET DISPOSITIF D'ANALYSE ET DE MESURE DES PARAMETRES PHYSIQUES D'UN MATERIAU EN COUCHES PAR RADIOMETRIE THERMIQUE"

La présente invention est relative à un procédé et à un dispositif d'analyse et de mesure des paramètres physiques d'un matériau en couches par radiométrie thermique.

La technique d'analyse de ce type de matériaux par radiométrie thermique, notamment radiométrie photothermique, a déjà fait l'objet de travaux récents en vue notamment de la mesure d'épaisseur d'une couche de revêtement.

Pour la consultation d'une bibliographie détaillée et récente des publications relatives à ces travaux, on pourra se reporter au "3" topical meeting on photoacoustic and photothermal spectroscopy" - Paris 5-8 Avril 1983. Journal de Physique, Supplément au fascicule 10, C6, 1983.

Dans son principe, cette méthode consiste à observer les variations du rayonnement thermique émis par la surface d'un échantillon soumis à l'illumination d'une source lumineuse modulée périodiquement en amplitude . Le rayonnement absorbé périodiquement par l'échantillon est converti par celui-ci en chaleur et produit un rayonnement thermique.

Un tel principe a été mis en application dans le cas de la mesure de l'épaisseur de films minces opaques, ainsi qu'il a été décrit, notamment, dans la demande de brevet européen EP-A-O 124 224 publiée le 7 Novembre 1984.

Selon la technique décrite dans cette demande de brevet, deux faisceaux laser, un faisceau d'excitation et un faisceau d'analyse,sont focalisés en un même point d'analyse de l'échantillon. Le faisceau d'excitation est modulé à très haute fréquence, 10 000 Hz, et le faisceau d'analyse permet d'effectuer une détection du rayonnement thermique engendré par l'excitation de l'échantillon.

Cette méthode, bien que susceptible de donner satisfaction dans l'application envisagée, met en oeuvre un dispositif complexe, en raison de la nécessité de deux faisceaux laser et de focaliser ceux-ci au point d'analyse.

En outre, limitée à une excitation au moyen d'un rayonnement électromagnétique cohérent, elle ne permet pas, en raison du caractère nécessairement limité en nombre des longueurs d'ondes d'émission des lasers d'excitation susceptibles d'être utilisés,et donc en spectre de bande d'émission, d'autoriser une large application au milieu industriel dans les situations les plus diverses.

La présente invention a pour objet de remédier aux inconvénients précités par la mise en oeuvre d'un procédé et d'un dispositif d'analyse et de mesure des paramètres d'un matériau en couches par radiométrie, dans lequel le faisceau laser d'analyse est supprimé.

Un autre objet de la présente invention est la mise en oeuvre d'un procédé et d'un dispositif d'analyse et de mesure des paramètres d'un matériau en couches dans lequel l'excitation de l'échantillon à analyser est obtenue par tout moyen approprié adapté à la nature de l'échantillon à analyser.

Un autre objet de la présente invention est enfin la mise en oeuvre d'un procédé et d'un dispositif d'analyse et de mesure des paramètres autres que l'épaisseur de la couche de revêtement d'un matériau en couches, paramètres tels que absorbtivité, la diffusivité et la résistance thermique de l'interface entre les couches.

Le procédé d'analyse et de mesure des paramètres physiques d'un matériau en couches comprenant une couche de base et une couche superficielle par radiométrie est remarquable en ce que, en vue de déterminer les paramètres tels que l'absorbtivité B, la diffusivité A de la couche superficielle et la résistance thermique R de l'interface entre les deux couches, ledit procédé consiste, relativement à un échantillon de référence comportant une couche superficielle d'épaisseur d' connue, à exciter cet échantillon, côté couche superficielle, au moyen d'un flux d'énergie thermique, modulé en amplitude selon une loi périodique, la fréquence Fh de modulation, dite fréquence haute, étant choisie très supérieure à une valeur pour laquelle la longueur de diffusion thermique l' de la couche superficielle est petite par rapport à l'épaisseur d' de celle-ci. Le signal thermique engendré par absorption par l'échantillon est détecté et l'amplitude Th et le déphasage φh du signal thermique par rapport au signal de modulation d'amplitude d'excitation sont mesurés. L'échantillon est également excité, côté couche superficielle, au moyen d'un flux d'énergie thermique modulé en amplitude selon une loi périodique, la fréquence Fb de modulation d'amplitude, dite fréquence basse, étant choisie de valeur telle que la longueur de diffusion thermique l' de la couche superficielle soit voisine de l'épaisseur d' de celle-ci, le signal thermique engendré par cet échantillon est détecté et l'amplitude Tb du signal thermique est mesurée. Le paramètre A de diffusivité thermique est déterminé à partir du rapport des

amplitudes $\frac{Tb}{Th}$ aux fréquences basse et haute et de la relation

$$B\sqrt{A} = \frac{tg\left(\phi + \frac{\pi}{2}\right)}{1 - tg\left(\phi + \frac{\pi}{2}\right)} \sqrt{4\pi Fh}$$

par interpolation à partir d'un abaque ou réseau de valeurs

$$\frac{d}{\sqrt{A}}, \quad \frac{Tb}{Th}, \quad B\sqrt{A}$$

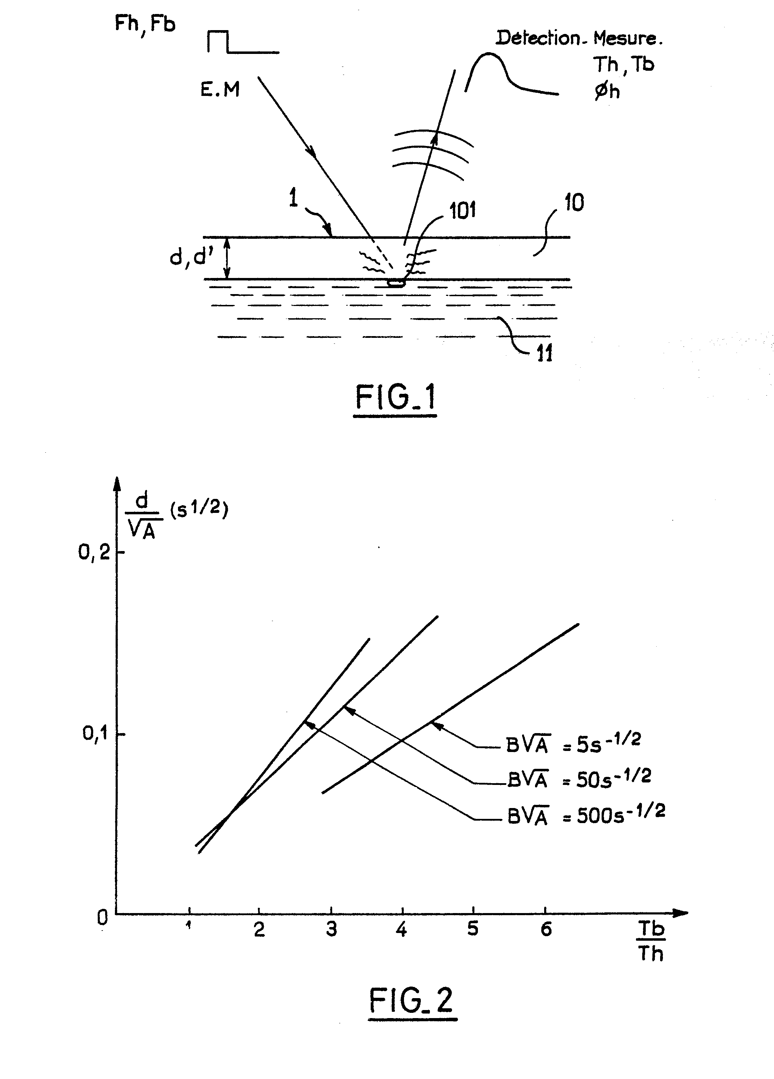

(Fig.2) puis le paramètre B de l'absorptivité.

Le dispositif pour la mise en oeuvre du procédé d'analyse et de mesure des paramètres physiques d'un matériau en couches comprenant une couche de base et une couche superficielle par radiométrie est remarquable en ce qu'il comprend des moyens d'excitation d'un échantillon du matériau côté couche superficielle, au moyen d'un flux d'énergie thermique, modulé en amplitude selon une loi périodique, selon au moins une première fréquence de modulation Fh dite fréquence haute et une deuxième fréquence de modulation Fb dite fréquence basse, la fréquence haute Fh de modulation d'amplitude étant choisie de valeur très supérieure à une valeur pour laquelle la longueur de diffusion thermique de la couche superficielle est petite par rapport à l'épaisseur de celle-ci et la fréquence basse Fb de modulation d'amplitude étant choisie de valeur telle que la longueur de diffusion thermique de la couche superficielle soit voisine de l'épaisseur de celle-ci. Des moyens de détection du signal thermique engendré par cet échantillon et des moyens de mesure des amplitudes Th, Tb des déphasages $\varphi$h, $\varphi$b du signal thermique par rapport au signal de modulation en amplitude d'excitation sont prévus.

Des moyens de mémorisation des signaux précités et de calcul permettent le calcul de la diffusivité A et de l'absorbtivité B de la couche superficielle, de son épaisseur d et de la résistance thermique R de l'interface entre les deux couches.

Le procédé et le dispositif objet de l'invention trouvent application au contrôle non destructif et sans contact de matériaux en couches dans les domaines de l'industrie les plus divers, tels que revêtements minéraux, organiques et métalliques, matériaux composites en feuilles, industrie des semi-conducteurs et pour tout type de matériaux opaques ou semi-transparents. En outre, et moyennant une adaptation minime, le dispositif et le procédé objet de l'invention peuvent, avantageusement, être utilisés en hématologie et en biotechnologie en vue de déterminer les paramètres correspondants de solides, semi-solides, liquides, poudres, gels, tissus vivants ou liquides physiologiques.

L'invention sera mieux comprise à la lecture de la description et à l'observation des dessins ci-après, dans lesquels :

- la figure 1 représente un schéma illustratif du procédé, objet de l'invention,
- la figure 2 représente un abaque ou réseau de valeurs reliant les paramètres théoriques tels que l'épaisseur d, l'absorptivité B, la diffusivité A, et les amplitudes du rayonnement thermique émis par le matériau suite à excitation,
- la figure 3 représente un abaque ou réseau de valeurs théoriques reliant le déphasage $\varphi$, l'épaisseur d de la couche superficielle du matériau et la résistance thermique R de l'interface entre les deux couches du matériau,

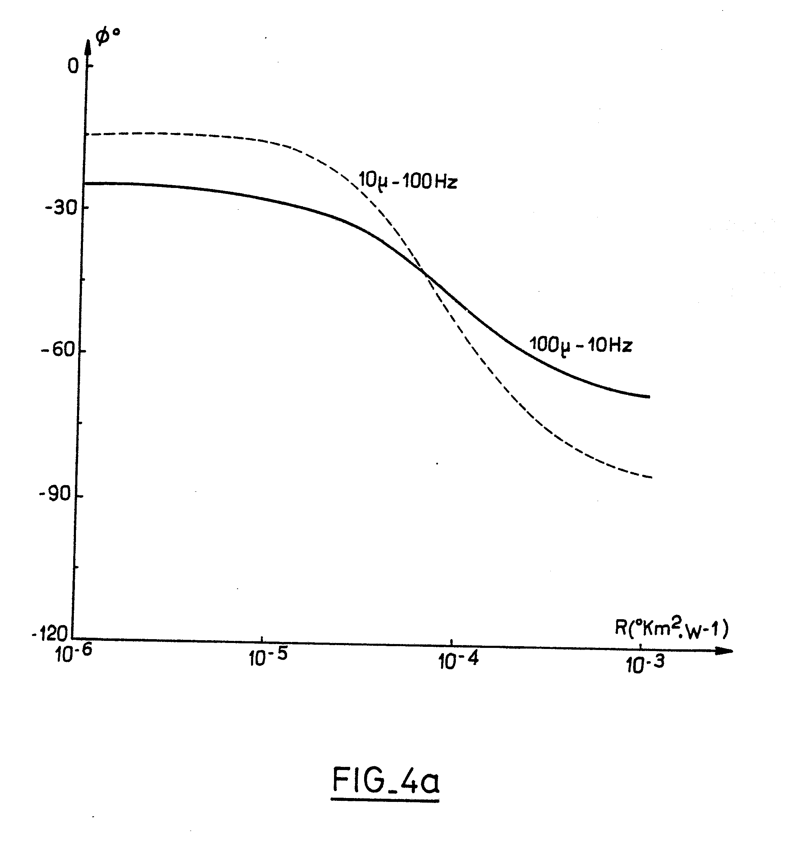

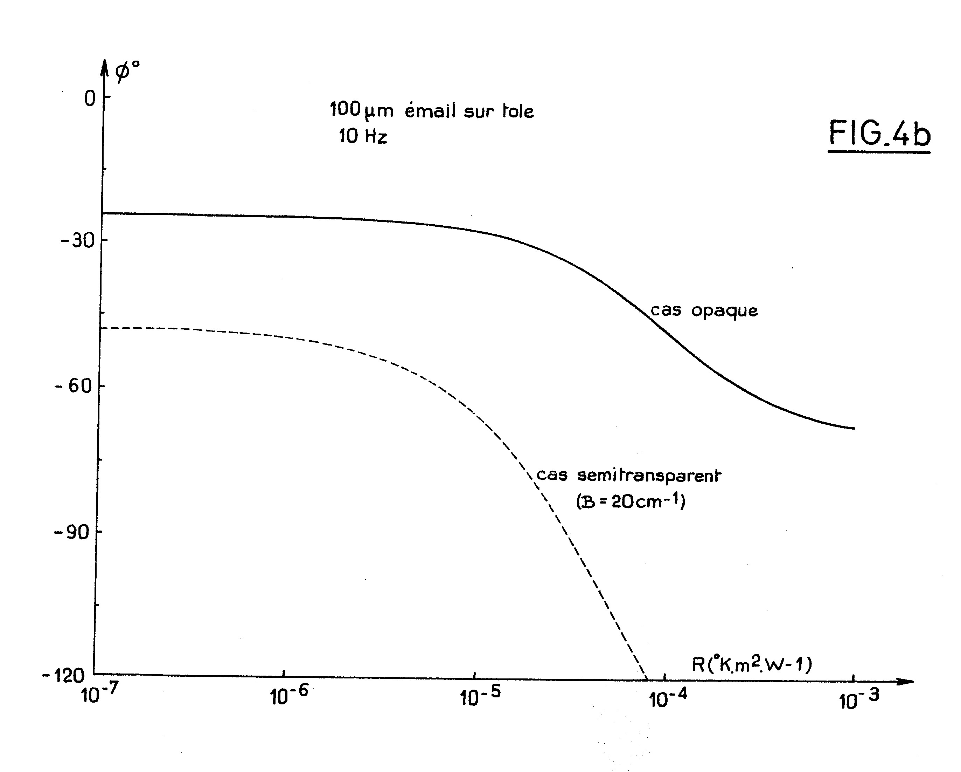

- les figures 4a et 4b représentent un abaque ou réseau de valeurs théoriques reliant les paramètres de déphasage $\varphi$ entre le rayonnement thermique émis par l'échantillon et le signal d'excitation, la résistance thermique R de l'interface entre les deux couches respectivement pour des valeurs particulières d'épaisseur d de la couche superficielle du matériau pour des valeurs de fréquence de modulation déterminée et pour des natures différentes de la couche superficielle, matériau opaque ou matériau semi-transparent constituant la couche superficielle ou, le matériau constituant la couche superficielle étant identique sur un même échantillon, pour des valeurs différentes de la longueur d'onde du rayonnement électromagnétique correspondant à l'opacité et à la semi-transparence du matériau constituant la couche superficielle, lorsque l'excitation du matériau est effectuée au moyen d'un rayonnement électromagnétique.
- les figures 5a et 5b représentent respectivement un abaque ou réseau de valeurs théoriques reliant l'absorptivité du matériau constituant la couche superficielle, la résistance thermique de l'interface entre les deux couches, le rapport des amplitudes du rayonnement thermique émis par le matériau suite à excitation et le déphasage entre le rayonnement thermique précité et le signal d'excitation,
- la figure 6 représente un schéma synoptique d'un dispositif pour la mise en oeuvre du procédé, objet de l'invention.

Le procédé d'analyse et de mesure des paramètres physiques d'un matériau en couches, objet de l'invention, sera décrit tout d'abord en liaison avec la figure 1.

Sur cette figure, le matériau noté 1, est représenté comme constitué d'une couche de base notée 11 et d'une couche superficielle notée 10. Ce type de matériau est courant dans la majorité des domaines de l'industrie, dans lesquels un revêtement est apporté soit par émaillage, par pulvérisation à chaud ou par toute technique traditionnelle sur un substrat. En outre, par matériau en couches comprenant une couche de base et une couche superficielle, on entend tout matériau industriel ou produit physiologique dans lesquels une zone de base et une zone superficielle sont séparées par une zone intermédiaire à gradient de concentration des composants constitutifs des zones de base et superficielle.

Le procédé objet de l'invention a pour objet de déterminer les paramètres physiques du matériau et en particulier de la couche superficielle de celui-ci, paramètres tels que l'absorptivité notée B, la diffusivité notée A de la couche superficielle et la résistance thermique R de l'interface entre les deux couches 10 et 11 constitutives du matériau. Les paramètres précités notamment l'absorptivité B et la diffusivité A de la couche superficielle, concernent l'absorptivité et la diffusivité de la couche superficielle soumise au flux d'énergie thermique d'excitation.

Conformément à l'invention, le procédé consiste relativement à un échantillon de référence comportant une couche superficielle d'épaisseur d' connue à exciter l'échantillon 1 au moyen d'un flux d'énergie thermique modulé en amplitude, selon une loi périodique. La fréquence Fh de modulation d'amplitude, dite fréquence haute, est choisie très supérieure à une valeur pour laquelle la longueur de diffusion thermique l' de la couche superficielle est petite par rapport à l'épaisseur d' de celle-ci.

Le signal thermique engendré, par absorption par l'échantillon 1 est détecté et l'amplitude Th et le déphasage $\varphi$ h du signal thermique par rapport au signal de modulation d'amplitude d'excitation sont alors mesurés. On notera, que dans la présente description, les variables ou paramètres non indicés correspondent aux valeurs théoriques calculées de réseaux de valeurs ou abaques obtenus à partir d'un modèle mathématique, alors que les mêmes paramètres ou variables indicés correspondent à des valeurs mesurées.

L'échantillon 1 est également excité côté couche superficielle au moyen d'un flux d'énergie thermique modulé en amplitude selon une loi périodique, la fréquence de modulation d'amplitude notée Fb, dite fréquence basse étant choisie de valeur telle que la longueur de diffusion thermique l' de la couche superficielle soit voisine de l'épaisseur d' de celle-ci. Sur la figure 1, les fréquences de modulation sont également notées Fh, Fb. Le signal thermique engendré par l'échantillon soumis à cette excitation est détecté et l'amplitude Tb de ce signal à la fréquence de modulation considérée est alors mesurée. Le paramètre A de diffusivité relatif à la couche superficielle peut alors être déterminé à partir du rapport des amplitudes du signal thermique, ou rayonnement thermique, aux fréquences basse et haute, $\frac{Tb}{Th}$ , et de la relation

$$B\sqrt{A} = \frac{tg\ (\ \varphi + \frac{\pi}{2}\ )}{1\ -\ tg(\ \varphi + \frac{\pi}{2})}\ \sqrt{4\pi Fh}$$

par interpolation à partir d'un abaque tel que représenté en figure 2 ou d'un réseau de valeurs

$$\frac{d}{\sqrt{A}}\ ,\ \frac{Tb}{Th},\ B\sqrt{A}.$$

Le paramètre B relatif à l'absorptivité de la couche superficielle 10 peut alors être également déterminé de façon analogue.

On notera que les paramètres $\frac{d}{\sqrt{A}}$ et $B\sqrt{A}$ sont respectivement homogènes à un temps à la puissance 1/2 et − 1/2.

Le choix des fréquences de modulation Fh et Fb pour un matériau de nature donnée, notamment de la couche superficielle, peut être effectué avantageusement en tenant compte de l'ordre de grandeur de la diffusivité A, environ $10^{-4}$, $10^{-5}$ pour les métaux et $10^{-6}$, $10^{-7}$ pour les matériaux diélectriques. Pour une épaisseur d' connue donnée de la couche superficielle de l'échantillon de référence, il est possible de déduire une fréquence haute Fh de travail sensiblement égale à

$$Fh\ =\ \frac{10.A}{\pi.d'^2}$$

. La fréquence basse Fb de modulation peut alors être choisie de valeur telle que la longueur de diffusion l' soit de l'ordre de grandeur de l'épaisseur d', soit Fb, sensiblement égal à

$$\frac{A}{d'^2.\pi} .$$

A titre d'exemple non limitatif, les fréquences de modulation haute et basse Fh, Fb peuvent être choisies selon les applications considérées, dans une plage de fréquence comprise entre 10 Hz et 300 Hz. Le choix de la valeur de fréquence de modulation étant arrêté pour un type de matériau donné et pour un échantillon de référence donné, la mise en oeuvre du procédé tel que précédemment défini sur cet échantillon de référence permet de déterminer avec un bon degré de précision la valeur des paramètres de diffusivité A et d'absorptivité B de la couche superficielle correspondante.

Dans la mise en oeuvre du procédé objet de l'invention,

4

le calcul du paramètre $\frac{d}{\sqrt{A}}$ est effectué en supposant connu l'ordre de grandeur de l'effusivité du matériau constitutif de la couche superficielle, ce paramètre ayant une influence du second ordre dans ce calcul. Il est à noter en outre, que le fait d'utiliser le seul rapport des amplitudes du signal thermique aux fréquences haute et basse, permet de s'affranchir de la connaissance d'un certain nombre de paramètres indépendants de la fréquence de modulation, tel que la réflectivité monochromatique du dioptre couche superficielle air, l'émissivité infrarouge de la couche superficielle, le niveau d'éclairement sur l'échantillon lorsque l'excitation par le flux thermique est effectuée au moyen d'un rayonnement électromagnétique, le facteur de gain du système de détection.

Le procédé, objet de l'invention, permet également d'effectuer une analyse et une mesure d'un paramètre physique de la couche superficielle du matériau telle que l'épaisseur d d'un échantillon quelconque de ce matériau, les paramètres correspondants d'absorptivité B et de diffusivité A étant déterminés, conformément à l'opération décrite précédemment, au moyen du procédé de l'invention. Dans ce cas, la résistance thermique R doit de préférence être considérée comme négligeable, ou de faible valeur, c'est-à-dire que le procédé de la présente invention peut avantageusement être appliqué à des matériaux en couches , dans lesquels il existe très peu d'inclusions, de corps étrangers ou de délamination au niveau de l'interface entre les deux couches.

Conformément au procédé de l'invention, les paramètres A et B de diffusivité et d'absorptivité étant connus ou déterminés comme précédemment, un échantillon quelconque de matériau, dont on veut déterminer l'épaisseur d de la couche superficielle, est soumis à des étapes analogues aux étapes précédemment décrites, relativement à l'échantillon de référence. L'épaisseur d de la couche superficielle de l'échantillon quelconque de matériau, peut alors être déterminée à partir de l'abaque ou du réseau de valeurs

$$\frac{d}{\sqrt{A}} \ , \ \frac{Tb}{Th} \ , \ B\sqrt{A}$$

représenté en figure 2.

Selon une variante de réalisation du procédé précédemment décrit, l'échantillon de matériau quelconque, lorsqu'il est soumis à une étape analogue à celle à laquelle l'échantillon de référence a été soumis pour détecter le signal thermique engendré, suite à excitation de celui-ci, sous fréquence de modulation à fréquence basse Fb, ce procédé consiste en outre à mesurer le déphasage φb du signal thermique par rapport au signal de modulation en amplitude d'excitation de fréquence Fb. Bien entendu, ainsi que déjà mentionné, φb représente le déphasage mesuré du signal thermique par rapport au signal de modulation en amplitude d'excitation.

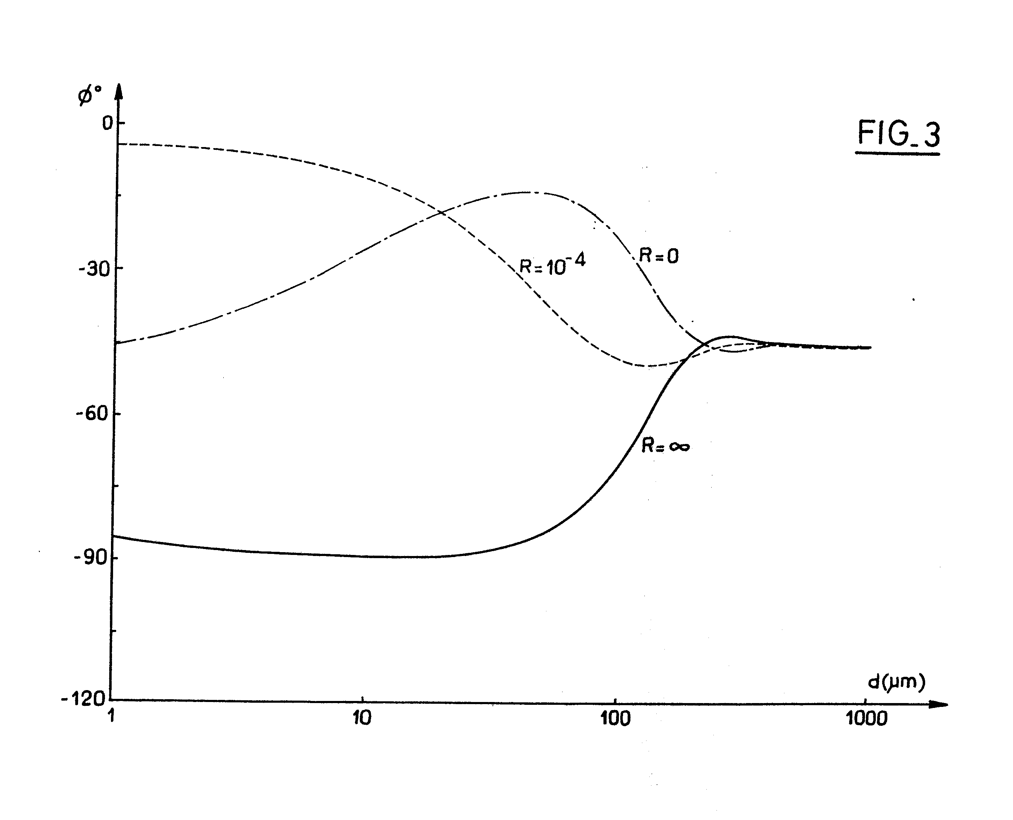

L'épaisseur d de la couche superficielle 10 du matériau, de l'échantillon quelconque de celui-ci, peut alors avantageusement être déterminée à partir de l'abaque ou du réseau de valeurs φ,R, d tel que représenté en figure 3, φ représentant la valeur théorique du déphasage.

Une variante avantageuse du procédé de l'invention, sera maintenant donnée dans le cas, par exemple, d'une utilisation pour le suivi du traitement de la couche superficielle, traitement affectant par exemple la valeur réelle du paramètre d'absorptivité B, ces traitements de type industriel pouvant consister en des traitements de recuit du matériau, de vieillissement ou des traitements permettant d'effectuer ultérieurement l'analyse de la couche superficielle par réflectivité spectrale.

Dans le procédé qui suit, on admet pour hypothèse que le paramètre de diffusivité A de la couche superficielle est connu ou a été déterminé ainsi que décrit précédemment, les paramètres de résistance thermique R de l'interface entre les deux couches et d'épaisseur de la couche superficielle d pouvant être quelconque, pourvu que cette épaisseur soit supérieure à la longueur de diffusion l de cette même couche superficielle. Conformément à cette variante de réalisation, un échantillon quelconque de matériau est soumis côté couche superficielle à une excitation au moyen d'un flux d'énergie thermique, modulé en amplitude, selon une loi périodique, la fréquence de modulation d'amplitude étant choisie de valeur égale sensiblement à la valeur Fh. Le signal thermique engendré par absorption par la couche superficielle du matériau est détecté et le déphasage φh du signal thermique par rapport au signal de modulation en amplitude d'excitation est mesuré.

L'absorptivité B de la couche superficielle peut alors avantageusement être déterminée à partir de la relation

$$B \ = \ \frac{tg\left(\phi + \frac{\pi}{2}\right)}{1 - tg\left(\phi + \frac{\pi}{2}\right)} \ \sqrt{\frac{4\pi Fh}{A}}$$

Cette même relation peut également être exprimée sous la forme plus simple

5

$$B\sqrt{A} = \frac{-\sqrt{4\pi Fh}}{1 + tg\phi}$$

Bien entendu, cette nouvelle variante du procédé, objet de l'invention, peut également être mise en oeuvre de façon analogue pour la détermination du paramètre de diffusivité A de la couche superficielle d'un échantillon quelconque d'un matériau, l'absorptivité B de celle-ci ayant par exemple été déterminée à partir d'un échantillon de référence, ainsi que décrit précédemment. Dans ce but, l'échantillon quelconque de matériau est également soumis, côté couche superficielle à une excitation, au moyen d'un flux d'érergie thermique modulé en amplitude, à une fréquence choisie de valeur égale sensiblement à la valeur Fh. Le signal thermique engendré par absorption par le matériau, est détecté et le déphasage φh de ce signal thermique par rapport au signal de modulation d'amplitude d'excitation est mesuré. La diffusivité A de la couche superficielle peut alors être déterminée à partir de la relation

$$A = \frac{1}{B^2} \left( \frac{tg\left(\phi + \frac{\pi}{2}\right)}{1 - tg\left(\phi + \frac{\pi}{2}\right)} \right)^2 \cdot 4\pi Fh.$$

Cette relation peut également être exprimée à partir de la relation simplifiée précédemment.

Une variante avantageuse du procédé objet de l'invention, sera maintenant décrite dans le cas où l'on souhaite procéder à la détermination de la résistance thermique R de l'interface entre les deux couches.

Selon cette variante de réalisation, on admet par hypothèse que les paramètres du matériau quelconque, tel que l'épaisseur d, la diffusivité A et l'absorptivité B sont connus ou déterminés, conformément aux mises en oeuvre du procédé précédemment décrit.

Conformément au procédé de l'invention, le matériau, ou un échantillon quelconque du matériau est soumis côté couche superficielle 10, à une excitation au moyen d'un flux d'énergie thermique modulé en amplitude, selon une loi périodique, la fréquence de modulation d'amplitude étant choisie de valeur égale, sensiblement, à la valeur de fréquence basse Fb. Le signal thermique engendré par absorption par le matériau est détecté et le déphasage φb du signal thermique par rapport au signal de modulation en amplitude d'excitation est alors mesuré. La résistance thermique R de l'interface entre les deux couches peut alors être déterminée, à partir d'un abaque φ, R ou réseau de valeurs tel que représenté sur les figures 4a et 4b.

Sur ces figures, on constatera que les paramètres concernent le déphasage φ exprimé en degré, la résistance thermique R exprimée en °K.m².Watt$^{-1}$, pour différentes valeurs du paramètre de fréquence de modulation du signal d'excitation et de l'épaisseur correspondante de la couche superficielle exprimée en μm en ce qui concerne la figure 4a, les paramètres considérés concernant le déphasage φ exprimé en degré, la résistance thermique R exprimée dans les mêmes unités que relativement à la figure 4a, et différentes valeurs des paramètres d'absorptivité B en liaison avec la qualité d'opacité ou de semi-transparence de la couche superficielle.

Conformément à l'invention, les étapes consistant à exciter l'échantillon de référence, ou l'échantillon quelconque de matériau au moyen d'un flux d'énergie thermique modulé en amplitude, peuvent être simultanées ou successives. Dans ce dernier cas, les étapes peuvent être réalisées selon une succession déterminée, c'est-à-dire excitation à fréquence de modulation basse puis haute, Fb, Fh, ou soit excitation à fréquence de modulation haute puis basse Fh, Fb.

Conformément à une caractéristique du procédé objet de l'invention, le flux d'énergie thermique d'excitation peut être engendré par exemple au moyen d'un flux de fluide caloporteur modulé ou au moyen d'un échauffement par effet Joule lorsque la couche superficielle est conductrice de l'électricité. Ce dernier mode de réalisation du procédé de l'invention apparaît avantageux, notamment, dans le cas du contrôle de sertissage d'objets métalliques ou analogues.

Selon une variante avantageuse des caractéristiques précitées, le flux d'énergie thermique d'excitation peut être engendré au moyen d'un rayonnement électromagnétique susceptible d'être plus ou moins absorbé par la couche superficielle. Par rayonnement électromagnétique, on entend de manière avantageuse, mais non limitative, un rayonnement cohérent ou non, dont la longueur d'onde peut être située dans le domaine du spectre visible.

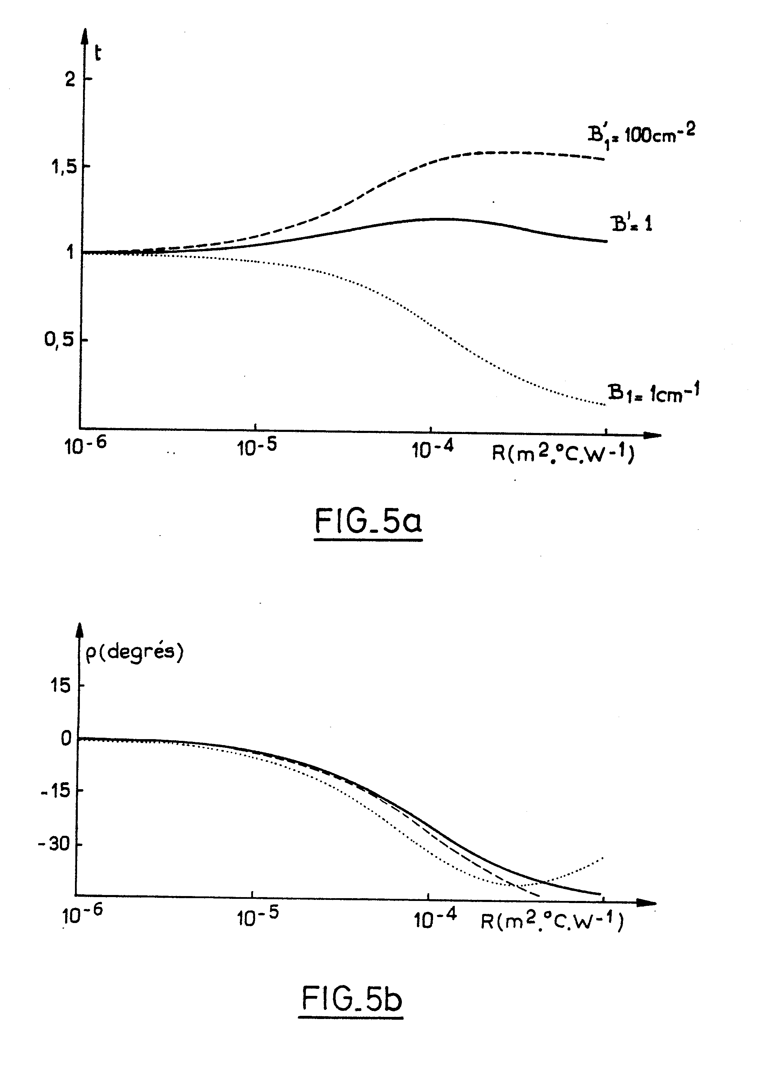

De préférence, mais de manière également non limitative, et dans le cas d'une utilisation d'un rayonnement électromagnétique, la longueur d'onde de ce rayonnement peut être choisie de façon à correspondre à la bande de semi-transparence de la couche superficielle. Ce choix particulier peut permettre d'assurer un meilleur transfert photothermique entre le rayonnement incident et la couche superficielle, et en conséquence, une meilleure sensibilité de la mesure des résistances de contact, c'est-à-dire en fait de la résistance thermique, ainsi qu'il apparaît notamment en figures 5a et 5b. Ces figures permettent de comparer dans le cas d'une même couche superficielle émail sur tôle, la différence d'évolution du rapport d'amplitude mesurée aux fréquences haute et basse et du déphasage φ par rapport au signal d'excitation de modulation

0 233 120

d'amplitude, selon que le rayonnement électromagnétique d'excitation est choisi avec une longueur d'onde correspondant à l'opacité ou à la semi-transparence de la couche superficielle. La sensibilité de mesure des faibles résistances de contact peut être améliorée de façon considérable. En outre, ce choix permet également d'améliorer la sensibilité de mesure des épaisseurs.

Dans le cas de la mesure du paramètre de diffusivité A, il sera au contraire avantageux de choisir un rayonnement électromagnétique dont la longueur d'onde correspond à une bonne opacité de la couche superficielle, afin d'améliorer la sensibilité de la mesure.

Afin d'assurer la mise en oeuvre du procédé, objet de l'invention, conformément à la précédente description,il est bien entendu avantageux de procéder à une étape de calibrage de phase consistant à soumettre au flux d'énergie thermique d'excitation, un échantillon calibré ; celui-ci peut être tout échantillon donnant un déphasage connu tel qu'un échantillon thermiquement épais et absorbant uniquement en surface, cet échantillon provoquant entre le signal thermique engendré par absorption par le matériau de l'échantillon calibré et le signal de modulation d'excitation un déphasage déterminé, sensiblement égal à 45°.

Dans ce but, il est avantageux d'utiliser, soit une lame de verre épaisse et noircie au noir de fumée, ou un bloc de métal, du plomb par exemple, garantissant dans les deux cas une absorption sur facique et des transferts thermiques internes se faisant uniquement par conduction. L'échantillon calibré précité doit être suffisamment épais pour qu'aux basses fréquences de modulation utilisées, sa longueur de diffusion thermique reste inférieure à son épaisseur.

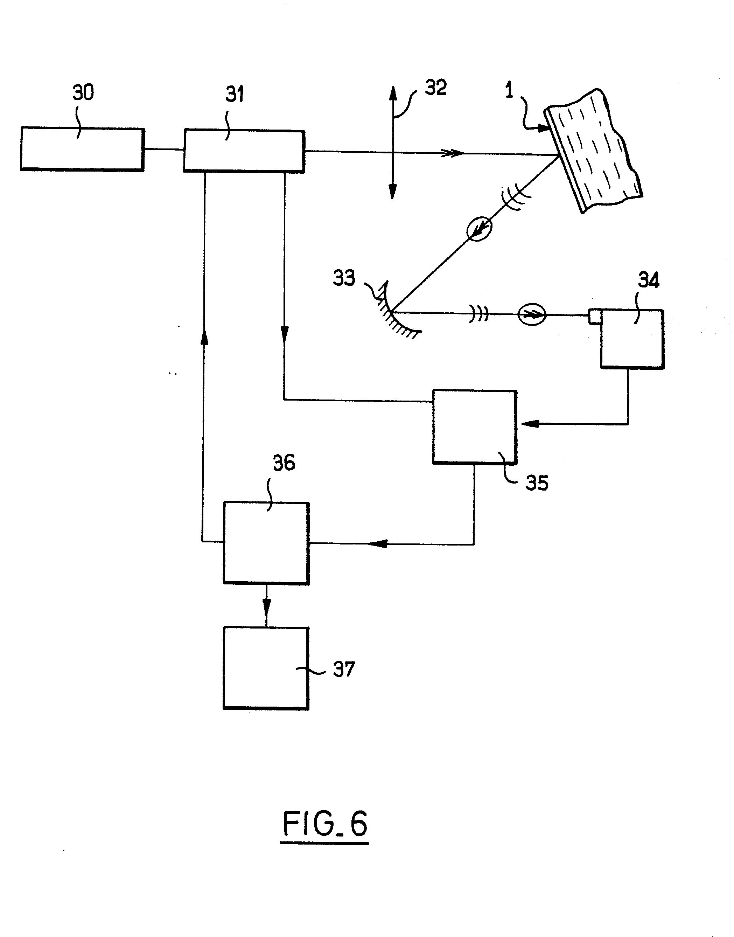

Un mode de réalisation avantageux du dispositif objet de l'invention, sera maintenant décrit en liaison avec la figure 6.

Selon la figure précitée, le dispositif permettant la mise en oeuvre du procédé comprend, avantageusement, des moyens d'excitation, notés 30, 31, d'un échantillon 1 de matériau, côté couche superficielle, au moyen d'un flux d'énergie thermique modulé en amplitude selon une loi périodique, selon au moins une première fréquence de modulation Fh, fréquence haute et une deuxième fréquence de modulation Fb, dite fréquence basse. Avantageusement, et de manière non limitative le dispositif de l'invention peut être agencé de façon à permettre le choix de la fréquence de modulation par l'opérateur. Bien entendu, le choix des fréquences haute et basse sera effectué par ce dernier, conformément au procédé de l'invention.

Sur la figure 6, les moyens d'excitation sont représentés,de manière non limitative, par un laser du type laser à argon 30, auquel est associé un modulateur 31. Le modulateur peut être constitué par un modulateur permettant d'engendrer une modulation sinusoïdale de l'amplitude du rayonnement laser correspondant, le modulateur pouvant alors être constitué par un système modulateur à polariseurs tournants. Le caractère parfaitement sinusoïdal de la modulation n'étant pas requis, il est également possible d'effectuer une modulation par impulsions répétées sous réserve d'effectuer,de préférence,une détection synchrone convenable. Dans ce cas, la source d'émission lumineuse peut être constituée par des lampes éclairs, un laser modulé en impulsions de type "Q-Switch" ou analogue.

Une optique de focalisation 32 permet la focalisation du faisceau modulé sur l'échantillon 1.

Le dispositif comprend en outre des moyens de détection, notés 33 - 35, du signal thermique engendré par l'échantillon 1, et des moyens de mesure notés 36, des amplitudes Th, Tb et des déphasages $\varphi$h et $\varphi$b du signal thermique par rapport au signal de modulation en amplitude d'excitation. Sur la figure 6, ces moyens de mesure sont référencés en 36. A titre d'exemple non limitatif, 33 représente un miroir de type miroir sphérique argenté, permettant la focalisation du signal thermique sur une cellule de détection infrarouge 34, laquelle délivre un signal détecté à un système de détection synchrone 35 commandé directement par le modulateur 31. Les moyens de mesure 36 peuvent être constitués, par exemple, par des moyens de conversion analogiques-numériques, et de mémorisation des valeurs numériques correspondantes mesurées.

Des moyens de calcul sont également prévus de façon à permettre le calcul de la diffusivité A de la couche superficielle de l'épaisseur d et de l'absorptivité B de cette même couche superficielle, selon la méthode déjà décrite, conformément au procédé de l'invention, ainsi que bien entendu, de la résistance thermique R de l'interface entre les deux couches.

De manière avantageuse, les moyens de mémorisation et de calcul et même les moyens de conversion analogiques-numériques peuvent consister en un microordinateur, normalement disponible dans le commerce, référencé 36 en figure 6, et muni de ses périphériques, tels que mémoire de masse, imprimante, moniteur d'affichage, les périphériques étant référencés 37. Ainsi qu'il apparaît en figure 6, le microordinateur 36 connecté au modulateur 31, assure la synchronisation de l'émission du faisceau d'excitation, la synchronisation étant rapportée à partir du modulateur 31 par exemple, au niveau du système de détection synchrone 35, lequel délivre le signal analogique de mesure des valeurs, directement au microordinateur 36.

De façon avantageuse et non limitative, les moyens de calcul peuvent comprendre des tables de transcodage ou réseau de valeurs précités, pour déterminer les valeurs des paramètres physiques, précédemment décrits. Les moyens de calcul peuvent comprendre,pour déterminer les valeurs des paramètres précités, des programmes de calcul à partir des valeurs mesurées et des réseaux de valeurs. Bien entendu, et de façon connue en soi, les tables de transcodage et/ou les programmes de calcul, peuvent être chargés ou implantés en mémoire morte.

De la même manière, les tables et/ou les programmes de calcul, peuvent comprendre, avantageusement, un programme de type "menu" permettant, par incitation de l'opérateur, le choix et l'introduction de paramètres relatifs au matériau à analyser. En particulier, il sera judicieux de provoquer l'introduction de la nature de la couche superficielle, en langage clair ou en langage codé, de la valeur estimée par l'opérateur,

7

pour un type de produit déterminé, de l'épaisseur de la couche superficielle, le programme précité pouvant alors, soit afficher la valeur des fréquences haute Fh et basse Fb à utiliser, soit au contraire effectuer un réglage automatique du choix de ces fréquences.

Dans la figure 6, on a représenté la focalisation d'un faisceau laser de faible ouverture en un point déterminé de l'échantillon, le rayonnement thermique engendré par ce dernier étant à son tour focalisée sur la cellule sensible d'un détecteur infrarouge. Il est bien entendu que le dispositif, objet de l'invention, peut également être adapté de façon à assurer l'excitation de la totalité de la surface de la couche superficielle ou tout au moins d'une partie de cette surface selon la totalité d'une de ses dimensions, notamment dans le cas de matériau en bande, le détecteur infrarouge étant alors remplacé par un dispositif de détection infrarouge à balayage, tel qu'une caméra à infrarouge à balayage de type de télévision, ce dispositif permettant d'analyser point par point, la totalité de la surface de l'échantillon excité ou illuminé. Dans ce cas, une détection synchrone au balayage de la caméra peut permettre l'analyse point par point et la mesure des valeurs correspondantes en ces points.

Le procédé et le dispositif objet de l'invention ont été décrits pour l'essentiel dans le cas de matériau bi-couches. Cependant, l'analyse de matériau monocouche ne sort pas du cadre de la présente inven tion dans la mesure où une lame de matériau, monocouche, peut toujours être considérée comme la couche superficielle d'une couche de base constituée par l'air ambiant.

Le procédé de l'invention et le dispositif permettant sa mise en oeuvre, sont particulièrement avantageux en raison du fait de leur souplesse d'emploi, laquelle permet d'effectuer,notamment pour les mesures de l'épaisseur, des mesures d'épaisseur de couche superficielle pouvant varier entre quelques micromètres à quelques centaines de micromètres.

En outre, ainsi qu'il a d'ailleurs été déjà mentionné dans la présente description, le champ d'application du procédé du dispositif de l'invention est des plus varié, puisque celui-ci concerne non seulement les domaines de l'industrie, de la mécanique ou du façonnage, mais également le domaine de l'analyse et de l'imagerie médicale.

## Revendications

1. Procédé d'analyse et de mesure des paramètres physiques d'un matériau en couches comprenant une couche de base et une couche superficielle par radiométrie thermique, caractérisé en ce que, en vue de déterminer lesdits paramètres tels que l'absorptivité B, la diffusivité A de la couche superficielle et la résistance thermique R de l'interface entre les deux couches d'un échantillon, ledit procédé, relativement à un échantillon de référence comportant une couche superficielle d'épaisseur d' connu, consiste :

a) à exciter cet échantillon, coté couche superficielle, au moyen d'un flux d'énergie thermique, modulé en amplitude selon une loi périodique, la fréquence Fh de modulation d'amplitude, dite fréquence haute, étant choisie très supérieure à une valeur pour laquelle la longueur de diffusion thermique l' de la couche superficielle est petite par rapport à l'épaisseur d' de celle-ci.

b) à détecter le signal thermique engendré, par absorption, par cet échantillon et à mesurer l'amplitude Th et le déphasage φh du signal thermique par rapport au signal de modulation d'amplitude d'excitation,

c) à exciter cet échantillon, côté couche superficielle, au moyen d'un flux d'énergie thermique modulé en amplitude selon une loi périodique, la fréquence Fb de modulation d'amplitude, dite fréquence basse, étant choisie de valeur telle que la longueur de diffusion thermique l' de la couche superficielle soit voisine de l'épaisseur d' de celle-ci,

d) à détecter le signal thermique engendré par cet échantillon soumis à cette excitation et à mesurer l'amplitude Tb du signal thermique,

e) à déterminer le paramètre A à partir du rapport des amplitudes du signal thermique aux fréquences basse et haute,

$\frac{Tb}{Th}$ , et de la relation

$$B\sqrt{A} = \frac{tg\left(\phi + \frac{\pi}{2}\right)}{1 - tg\left(\phi + \frac{\pi}{2}\right)} \sqrt{4\pi Fh}$$

par interpolation à partir d'un abaque ou réseau de

valeurs $\frac{d}{\sqrt{A}}$ , $\frac{Tb}{Th}$ , $B\sqrt{A}$ (figure 2) puis le paramètre B.

2. Procédé d'analyse et de mesure des paramètres physiques d'un matériau en couches comprenant une couche de base et une couche superficielle par radiométrie thermique, paramètres tels que épaisseur d, absorptivité B, diffusivité A de la couche superficielle et résistance thermique R de l'interface entre les deux couches, caractérisé en ce que en vue de déterminer l'épaisseur d de la couche superficielle, la résistance thermique R étant de faible valeur, ledit procédé consiste :

- à soumettre un échantillon de matériau de couche superficielle d'épaisseur d' connue au procédé selon la revendication 1, ledit échantillon constituant un échantillon de référence de façon à déterminer la diffusivité A et l'absorptivité B de la couche superficielle,

- à soumettre un échantillon de matériau notamment à des étapes analogues aux étapes b),c),d) du procédé de la revendication 1,

- à déterminer l'épaisseur d de la couche superficielle de l'échantillon de matériau à partir de l'abaque ou du réseau de valeurs

$$\frac{d}{\sqrt{A}}\;,\;\; \frac{Tb}{Th},\;\; B\sqrt{A}$$

(figure 2).

3. Procédé d'analyse et de mesure des paramètres physiques d'un matériau en couches selon la revendication 2, caractérisé en ce que l'échantillon de matériau étant soumis à une étape analogue à l'étape d) du procédé de la revendication 1, celle-ci consiste en outre :

- à mesurer le déphasage $\varphi b$ du signal thermique par rapport au signal de modulation en amplitude d'excitation où $\varphi b$ représente le déphasage à la fréquence basse Fb du signal de modulation en amplitude d'excitation,

- à déterminer l'épaisseur d de la couche superficielle de l'échantillon de matériau à partir de l'abaque ou du réseau de valeurs $\varphi$, R, d (fig. 3) où $\varphi$ représente la valeur du déphasage.

4. Procédé d'analyse et de mesure des paramètres physiques d'un matériau en couches comprenant une couche de base et une couche superficielle par radiométrie thermique, paramètres tels que épaisseur d, absorptivité B, diffusivité A de la couche superficielle et résistance thermique de contact R de l'interface entre les deux couches, caractérisé en ce que, en vue de déterminer l'absorptivité B de la couche superficielle, ledit procédé consiste :

- à soumettre un échantillon de matériau d'épaisseur d' connue au procédé selon la revendication 1, ledit échantillon constituant un échantillon de référence de façon à déterminer au moins la diffusivité A de la couche superficielle,

- à exciter ledit matériau, côté couche superficielle, au moyen d'un flux d'énergie thermique, modulé en amplitude selon une loi périodique, la fréquence de modulation d'amplitude étant choisie de valeur égale sensiblement à ladite valeur Fh,

- à détecter le signal thermique engendré, par absorption, par le matériau et à mesurer le déphasage $\varphi h$ du signal thermique par rapport au signal de modulation en amplitude d'excitation,

- à déterminer l'absorptivité de la couche superficielle à partir de la relation

$$B = \frac{tg\left(\phi + \frac{\pi}{2}\right)}{1 - tg\left(\phi + \frac{\pi}{2}\right)}\sqrt{\frac{4\pi Fh}{A}}$$

5. Procédé d'analyse et de mesure des paramètres physiques d'un matériau en couches comprenant une couche de base et une couche superficielle par radiométrie thermique, paramètres tels que épaisseur d, absorptivité B, diffusivité A de la couche superficielle et résistance thermique de contact R de l'interface entre les deux couches, caractérisé en ce que, en vue de déterminer la diffusivité A de la couche superficielle, ledit procédé consiste :

- à soumettre un échantillon de matériau d'épaisseur d' connue au procédé selon la revendication 1, ledit échantillon constituant un échantillon de référence de façon à déterminer au moins l'absorptivité B de la couche superficielle,

- à exciter ledit matériau, côté couche superficielle, au moyen d'un flux d'énergie thermique modulé en amplitude selon une loi périodique, la fréquence de modulation d'amplitude étant choisie de valeur égale sensiblement à ladite valeur Fh,

- à détecter le signal thermique engendré, par absorption, par le matériau et à mesurer le déphasage $\varphi h$ du signal thermique par rapport au signal de modulation en amplitude d'excitation,

- à déterminer la diffusivité de la couche superficielle à partir de la relation

9

$$A = \frac{1}{B^2} \left( \frac{tg \left( \phi + \frac{\pi}{2} \right)}{1 - tg \left( \phi + \frac{\pi}{2} \right)} \right)^2 \cdot 4 \pi Fh.$$

6. Procédé d'analyse et de mesure des paramètres physiques d'un matériau en couches comprenant une couche de base et une couche superficielle par radiométrie thermique, caractérisé en ce que l'épaisseur d l'absorptivité B, la diffusivité A étant déterminés selon l'une des revendications 1 à 4 précédentes, ledit procédé consiste, en vue de déterminer la résistance thermique R de l'interface entre les deux couches :
- à exciter ledit matériau, côté couche superficielle, au moyen d'un flux d'énergie thermique, modulé en amplitude selon une loi périodique, la fréquence de modulation d'amplitude étant choisie de valeur égale sensiblement à ladite valeur Fb,
- à détecter le signal thermique engendré, par absorption, par le matériau, et à mesurer le déphasage $\phi_b$ du signal thermique par rapport au signal de modulation en amplitude d'excitation,
- à déterminer la résistance thermique R de l'interface entre les deux couches à partir d'un abaque φ, R (Fig. 4a, 4b ) ou réseau de valeurs.

7. Procédé selon l'une des revendications précédentes, caractérisé en ce que les étapes consistant à exciter l'échantillon au moyen d'un flux d'énergie thermique modulé en amplitude selon une fréquence de modulation dite haute et selon une fréquence de modulation dite basse sont simultanées ou successives.

8. Procédé selon la revendication 7, caractérisé en ce que les étapes consistant à exciter l'échantillon étant successives, celles-ci sont réalisées selon une succession déterminée, excitation à Fb, Fh ou excitation à Fh, Fb.

9. Procédé selon l'une des revendications précédentes, caractérisé en ce que le flux d'énergie thermique d'excitation est engendré au moyen
- d'un rayonnement électromagnétique susceptible d' être absorbé par la couche superficielle, ou
- d'un flux de fluide caloporteur, ou
- d'un échauffement par effet Joule.

10. Procédé selon la revendication 9, caractérisé en ce que, dans le cas de l'utilisation d'un rayonnement électromagnétique, la longueur d'onde de ce rayonnement est choisie de façon à correspondre à la bande de semi-transparence de la couche superficielle.

11. Procédé selon l'une des revendications 2 à 10 précédentes, caractérisé en ce qu'il comprend une étape de calibrage de phase consistant à soumettre au flux d'énergie thermique d'excitation un échantillon calibré, thermiquement épais et absorbant uniquement en surface, ledit échantillon provoquant entre le signal thermique engendré par absorption par le matériau et le signal de modulation d'excita tion un déphasage de 45°.

12. Dispositif pour la mise en oeuvre du procédé d'analyse et de mesure des paramètres physiques d'un matériau en couches comprenant une couche de base et une couche superficielle par radiométrie thermique, selon l'une des revendications 1 à 11, caractérisé en ce qu'il comprend :
- des moyens d'excitation d'un échantillon du matériau côté couche superficielle, au moyen d'un flux d'énergie thermique, modulé en amplitude selon une loi périodique, selon au moins une première fréquence de modulation Fh dite fréquence haute et une deuxième fréquence de modulation Fb dite fréquence basse, la fréquence haute Fh de modulation d'amplitude étant choisie de valeur très supérieure à une valeur pour laquelle la longueur de diffusion thermique de la couche superficielle est petite par rapport à l'épaisseur de celle-ci et la fréquence basse Fb de modulation d'amplitude étant choisie de valeur telle que la longueur de diffusion thermique de la couche superficielle soit voisine de l'épaisseur de celle-ci,
- des moyens de détection du signal thermique engendré par cet échantillon et des moyens de mesure des amplitudes Th, Tb et des déphasages φh, φb du signal thermique par rapport au signal de modulation en amplitude d'excitation,
- des moyens de mémorisation des signaux précités, et de calcul,
. de la diffusivité A de la couche superficielle à partir du rapport des amplitudes du signal thermique aux fréquences basses et hautes,

$\frac{Tb}{Th}$ , et de la relation

$$B\sqrt{A} = \frac{tg \left( \phi + \frac{\pi}{2} \right)}{1 - tg \left( \phi + \frac{\pi}{2} \right)} 4 \pi Fh$$

par interpolation à partir d'un réseau de valeurs

$$\frac{d}{\sqrt{A}}, \quad \frac{Tb}{Th}, \quad B\sqrt{A}$$

puis le paramètre d'absorptivité B,
. de l'épaisseur d de la couche superficielle à partir du réseau de valeur $\varphi$, R et d, où $\varphi$ représente la mesure du déphasage, ou à partir du réseau de valeurs

$$\frac{d}{\sqrt{A}}, \quad \frac{Tb}{Th}, \quad B\sqrt{A},$$

. de l'absorptivité B de la couche superficielle à partir de la relation

$$B = \frac{tg\left(\phi + \frac{\pi}{2}\right)}{1 - tg\left(\phi + \frac{\pi}{2}\right)} \sqrt{\frac{4\pi Fh}{A}}$$

. de la diffusivité A de la couche superficielle à partir de la relation

$$A = \frac{1}{B^2} \left( \frac{tg\left(\phi + \frac{\pi}{2}\right)}{1 - tg\left(\phi + \frac{\pi}{2}\right)} \right)^2 \cdot 4\pi Fh$$

. de la résistance thermique R de l'interface entre les deux couches à partir du réseau de valeurs $\varphi$ et R.

13. Dispositif selon la revendication 12, caractérisé en ce que les moyens de calcul comprennent des tables de transcodage des réseaux de valeurs précitées pour déterminer les valeurs de diffusivité A, de l'absorptivité B, de l'épaisseur d de la couche superficielle et de la résistance thermique R de l'interface entre les deux couches.

14. Dispositif selon la revendication 12, caractérisé en ce que lesdits moyens de calcul com prennent, pour déterminer les valeurs de la diffusivité A, de l'absorptivité B, de l'épaisseur d de la couche superficielle et de la résistance thermique R de l'interface entre les deux couches, des programmes de calcul à partir des valeurs mesurées et des réseaux de valeurs.

15. Dispositif selon l'une des revendications 13 ou 14, caractérisé en ce que les tables de transcodage et/ou les programmes de calcul sont chargés en mémoire morte.

16. Dispositif selon l'une des revendications 13 à 15, caractérisé en ce que les tables de transcodage et/ou les programmes de calcul comprennent un programme de type "menu" permettant, par incitation de l'opérateur, l'introduction et le choix de paramètres relatifs au matériau à analyser.

17. Utilisation du procédé et du dispositif selon l'une des revendications précédentes, pour la détermination des paramètres physiques d'un matériau monocouche.

$$\underline{\text{FIG. 1}}$$

$$\underline{\text{FIG. 2}}$$

FIG_3

0233120

FIG_4a

FIG.4b

100 μm émail sur tole
10 Hz

cas opaque

cas semitransparent
$(B = 20 cm^{-1})$

$R(°K.m^2.W-1)$

0233120

0233120

FIG.5a

FIG.5b

0233120

FIG_6